# EUROPEAN PATENT APPLICATION

(11) **EP 4 793 768 A1**
(43) Date of publication of application: **19.08.2026**
(21) Application number: 24876250.2
(22) Date of filing: 15.08.2024
(51) Int. Cl.: G06F 9/451, G06F 3/0484, G06F 3/0482

(54) **METHOD AND APPARATUS FOR PAGE INTERACTION, DEVICE, AND STORAGE MEDIUM**

(30) Priority: 12.10.2023 CN 202311322433
(71) Applicant: Beijing Zitiao Network Technology Co., Ltd., Beijing 100190 (CN)
(72) Inventor: XU, Jiaqi, Beijing 100028 (CN); LI, Peifeng, Beijing 100028 (CN)
(74) Representative: Grünecker Patent- und Rechtsanwälte PartG mbB
(86) International application number: PCT/CN2024/112248
(87) International publication number: WO 2025/077430

(57) **Abstract**

According to embodiments of the disclosure, a method, apparatus, device and storage medium for page interaction are provided. The method includes: presenting an information display page of a user, the information display page at least comprising a work display area, the work display area comprising a work associated with the user;presenting a predetermined panel in response to detecting a first trigger operation for the work display area, the predetermined panel at least comprising a plurality of filtering conditions; and filtering, in response to detecting a selection operation on at least one filtering condition of the plurality of filtering conditions, a work meeting the at least one filtering condition from a work shown in the work display area for presenting in the work display area.

## Description

### CROSS-REFERENCE

**The** present application claims priority to Chinese Patent Application No. 202311322433.4, filed Oct. 12, 2023, entitled "METHOD, APPARATUS, DEVICE AND STORAGE MEDIUM FOR PAGE INTERACTION", the entirety of which is incorporated herein by reference.

### FIELD

Example embodiments of the present disclosure generally relate to a field of computers, and in particular, to a method, apparatus, device and computer-readable storage medium for page interaction.

### BACKGROUND

There are more and more applications currently designed to provide various services to users. For example, a user may post, browse, and view various types of content in an application, including multimedia content such as videos, images, image sets, sounds, and the like. The user may also interact with other users in the application, for example, like, favorite, comment, etc., or follow other users, access personal homepage of other users, and the like. A plurality of works posted by the user are presented in the personal homepage of the user. With the continuous increase in the number of works of the personal homepage, and the work type is continuously enriched, so that users cannot quickly locate the works they expect to browse.

### SUMMARY

In a first aspect of the present disclosure, a method for page interaction is provided. The method comprises: presenting an information display page of a user, the information display page at least comprising a work display area, the work display area comprising a work associated with the user; presenting a predetermined panel in response to detecting a first trigger operation for the work display area, the predetermined panel at least comprising a plurality of filtering conditions; and filtering, in response to detecting a selection operation on at least one filtering condition of the plurality of filtering conditions, a work meeting the at least one filtering condition from a work shown in the work display area for presenting in the work display area.

In a second aspect of the present disclosure, an apparatus for page interaction is provided. The apparatus comprises: an information presentation module configured to present an information display page of a user, the information display page at least comprising a work display area, the work display area comprising a work associated with the user; a predetermined panel presentation module configured to present a predetermined panel in response to detecting a first trigger operation for the work display area, the predetermined panel at least comprising a plurality of filtering conditions; and a filtering module configured to filter, in response to detecting a selection operation on at least one filtering condition of the plurality of filtering conditions, a work meeting the at least one filtering condition from the work shown in the work display area for presenting in the work display area.

In a third aspect of the present disclosure, an electronic device is provided. The device includes at least one processing unit; and at least one memory coupled to the at least one processing unit and storing instructions for execution by the at least one processing unit. The instructions, when executed by the at least one processing unit, cause the device to perform the method of the first aspect.

In a fourth aspect of the present disclosure, a computer-readable storage medium is provided. The medium stores a computer program thereon, and the computer program, when executed by a processor, implements the method of the first aspect.

It should be understood that the content described in this summary is not intended to limit key features or important features of embodiments of the present disclosure, nor is it intended to limit the scope of the present disclosure. Other features of the present disclosure will become readily understood from the following description.

### BRIEF DESCRIPTION OF DRAWINGS

The above and other features, advantages, and aspects of various embodiments of the present disclosure will become more apparent from the following detailed description taken in conjunction with the accompanying drawings. In the drawings, the same or similar reference numbers refer to the same or similar elements, wherein:
FIG. 1A illustrates a schematic diagram of an example environment in which embodiments of the present disclosure can be implemented;
FIG. 1B illustrates an example user interface;
FIGS. 2A-2B respectively illustrate schematic diagrams of examples of user interfaces according to some embodiments of the present disclosure;
FIGS. 3A-3B respectively illustrate schematic diagrams of examples of user interfaces according to some embodiments of the present disclosure;
FIG. 4 illustrates a schematic diagram of an example of a user interface according to some embodiments of the present disclosure;
FIGS. 5A-5B respectively illustrate schematic diagrams of examples of user interfaces according to some embodiments of the present disclosure;
FIGS. 6A-6B respectively illustrate schematic diagrams of examples of user interfaces according to some embodiments of the present disclosure;
FIGS. 7A-7B respectively illustrate schematic diagrams of examples of user interfaces according to some embodiments of the present disclosure;
FIG. 8 illustrates a flowchart of a process for page interaction according to some embodiments of the present disclosure;
FIG. 9 illustrates a block diagram of an apparatus for page interaction according to some embodiments of the present disclosure; and
FIG. 10 illustrates an electronic device in which one or more embodiments of the present disclosure may be implemented.

### DETAILED DESCRIPTION

Embodiments of the present disclosure will be described in more detail below with reference to the accompanying drawings. Although some embodiments of the present disclosure are shown in the accompanying drawings, it should be understood that the present disclosure may be implemented in various forms, and should not be interpreted as limited to embodiments set forth herein, on the contrary, these embodiments are provided for a more thorough and complete understanding of the present disclosure. It should be understood that the drawings and embodiments of the present disclosure are merely for example purposes and are not intended to limit the scope of the present disclosure.

In the description of the embodiments of the present disclosure, the term "comprising" and the like should be understood as openness, i.e., "comprising but not limited to". The term "based on" should be understood as "based at least in part on". The terms "one embodiment" or "the embodiment" should be understood as "at least one embodiment". The term "some embodiments" should be understood as "at least some embodiments". Other explicit and implicit definitions may also be included below.

It may be understood that data (including but not limited to the data itself, obtaining of the data or usage of the data) involved in this technical solution should follow requirements of the corresponding laws and regulations and related regulations.

It can be understood that, before the technical solutions disclosed in the embodiments of the present disclosure are used, types, usage scopes, usage scenarios and the like of the user information related to the present disclosure should be informed to the users and obtain user authorization in an appropriate manner according to the relevant laws and regulations.

For example, in response to receiving an active request from a user, prompt information is sent to the user to explicitly prompt the user that the operation requested to perform will need to obtain and use user information of the user, so that the user can autonomously select whether to provide user information to software or hardware such as electronic devices, application programs, servers and storage media which execute the operations of the technical solution of the present disclosure according to the prompt information.

As an optional but non-limiting implementation, in response to receiving an active request of the user, a manner of sending prompt information to the user may be, for example, a pop-up window, and prompt information may be presented in a text manner in the pop-up window. In addition, the pop-up window may further carry a selection control for the user to select "agree" or "not agree" to provide personal information to the electronic device.

It may be understood that the foregoing notification and obtaining a user authorization process are merely illustrative, and do not constitute a limitation on implementations of the present disclosure, and other manners that meet related laws and regulations may also be applied to implementations of the present disclosure.

In the present disclosure, the terms "information display page of user", "personal homepage" and "user related specific user interface" may be used interchangeably.

The term "work" of the present disclosure refers to any type of media work including, but not limited to, an audio file, a video file, a picture file, a text file, and the like. Specifically, the work may be, for example, a short video, music, a picture, a picture collection, a multimedia clip, an audio-visual material, a novel, and the like. The present disclosure is not limited in this respect.

### Example Environment

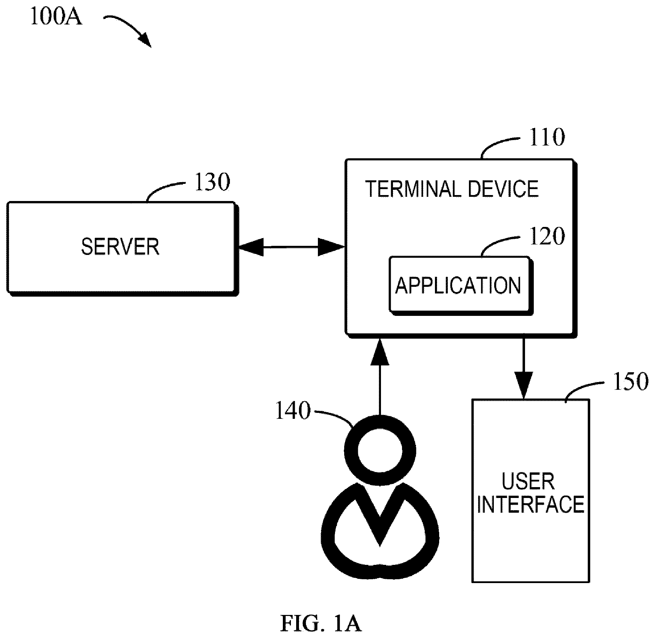

FIG. 1A illustrates a schematic diagram of an example environment 100A in which embodiments of the present disclosure can be implemented. In this example environment 100, an application 120 is installed in a terminal device 110. A user 140 may interact with the application 120 via the terminal device 110 and/or an attachment device of the terminal device 110. The application 120 may be a content sharing application capable of providing various services related to the media content to the user 140, including browsing, commenting, forwarding, creating (e.g., shooting and/or editing), posting, and the like. As used herein, "media content" includes one or more types of content, such as videos, images, animated images, image sets, audio, texts, and the like.

In the environment 100A of FIG. 1A, if the application 120 is active, the terminal device 110 may present a user interface 150 of the application 120. The user interface 150 may include various pages that the application 120 can provide, such as a user interface, a content creation page, a content posting page, a message page, a personal homepage, and so forth. The application 120 may provide a content browsing function to browse various types of content posted in the application 120. The application 120 may also provide content creation function, including shooting, uploading, editing, and/or posting media content. The application 120 may also provide an interaction function, including interacting with other users (for example, adding friends) and interacting with various types of content (including giving likes, favorites, comments, etc.).

In some embodiments, the terminal device 110 communicates with a server 130 to enable provisioning of services to the application 120. The terminal device 110 may be any type of a mobile terminal, a fixed terminal, or a portable terminal, including a mobile phone, a desktop computer, a laptop computer, a notebook computer, a netbook computer, a tablet computer, a media computer, a multimedia tablet, a personal communication system (PCS) device, a personal navigation device, a personal digital assistant (PDA), an audio/video player, a digital camera/camcorder, a positioning device, a television receiver, a radio broadcast receiver, an electronic book device, a gaming device, or any combination of the foregoing, including accessories and peripherals of these devices, or any combination thereof. In some embodiments, the terminal device 110 can also support any type of interface for a user (such as a "wearable" circuit, etc.). The server 130 may be various types of computing systems/servers capable of providing computing capability, including, but not limited to, mainframes, edge computing nodes, computing devices in a cloud environment, and the like.

It should be understood that the structures and functions of each element in the environment 100A are described for example purposes only, and do not imply any limitation on the scope of the present disclosure.

### Example Processes

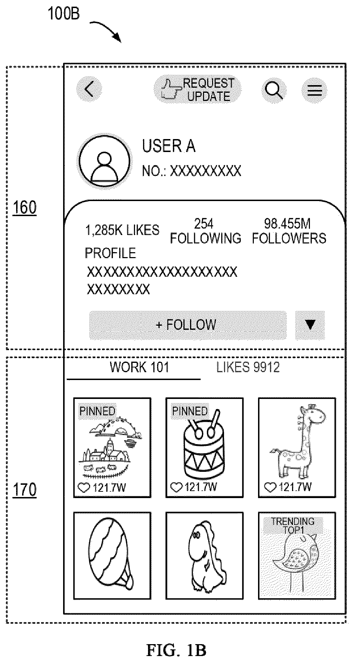

Currently, some Internet applications may provide a user related specific user interface (sometimes also referred to as a personal homepage) to display information associated with the user. Referring to FIG. 1B, FIG. 1B illustrates a schematic diagram of an example of a conventional user related specific user interface 100B.

As shown in FIG. 1B, a user related specific user interface 100B is typically divided into two areas, including an area 160 presenting user information and an area 170 presenting work information. In the user interface 100B, a user may able to browse works by sliding a finger up and down in the area 170.

In a traditional solution, a filtering function for works is limited to only recommendation pages, searching pages, and following pages. In other words, conventional user information display pages (e.g., personal homepages) do not support filtering works. In this case, with the continuous increase in the number of works of the personal homepage, and the work type is continuously enriched, the user cannot quickly locate the work they expect to browse only through a page sliding operation. Therefore, it is desirable to provide a page interaction solution to filter works in a user information display page.

According to the embodiments of the present disclosure, a scheme for page interaction is provided. The scheme comprises: a terminal device presents an information display page of a user, the information display page at least includes a work display area, and the work display area includes a work associated with the user; in response to detecting a first trigger operation for the work display area, the terminal device presents a predetermined panel, and the predetermined panel at least includes a plurality of filtering conditions; and in response to detecting a selection operation on at least one filtering condition of the plurality of filtering conditions, the terminal device filters a work meeting the at least one filtering condition from a work shown in the work display area for presenting in the work display area. In this way, the works of the user can be filtered in the personal homepage, so that the user can quickly browse the corresponding work as needed, thereby obtaining a better browsing experience.

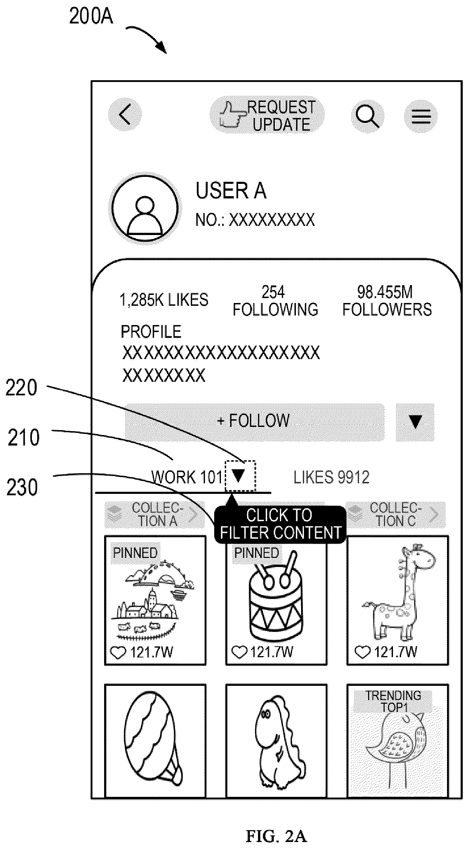

For better understanding of various embodiments of the present disclosure, example user interfaces illustrated in FIGS. 2A-7B are referenced in the example embodiments below. It should be understood that the user interfaces illustrated in FIGS. 2A-7B are merely examples, and various designs may actually exist. For example, individual graphical elements and/or controls in the user interface may have different arrangements and different visual representations, one or more of the elements and/or controls may be omitted or replaced, and one or more other elements and/or controls may also be present. In addition, any suitable content may be included in the user interfaces. The scope of the present disclosure is not limited in this respect.

Further, the user may implement switching and jumping of the user interfaces by activating a control/entry in each user interface. It should be understood that the logic for switching and jumping may be arbitrarily set. For example, in an example embodiment, the user jumps from a first user interface to a second user interface by activating the control. In other embodiments, the user may jump from the first user interface to a third user interface by activating another control. The present disclosure is not limited in this respect. It should also be understood that although a plurality of user interfaces is described in one particular embodiment, any user interface described in this disclosure may be implemented and protected independently as an individual embodiment.

In operation, the terminal device 110 presents an information display page of the user, the information display page at least includes a work display area, and the work display area includes a work associated with the user. In response to detecting a first trigger operation for the work display area, the terminal device 110 presents a predetermined panel, and the predetermined panel at least includes a plurality of filtering conditions. Further, in response to detecting the selection operation on at least one filtering condition of the plurality of filtering conditions, the terminal device 110 filters a work meeting the at least one filtering condition from the work shown in the work display area for presenting in the work display area. In this way, the works of the user can be filtered in the personal homepage, so that the user can quickly browse the corresponding work as needed, thereby obtaining a better browsing experience.

Next, how to trigger display of the predetermined panel will be described in conjunction with FIGS. 2A -3B, FIGS. 2A -3B illustrate an example user interface 200A, an example user interface 200B, an example user interface 300A and an example user interface 300B, respectively.

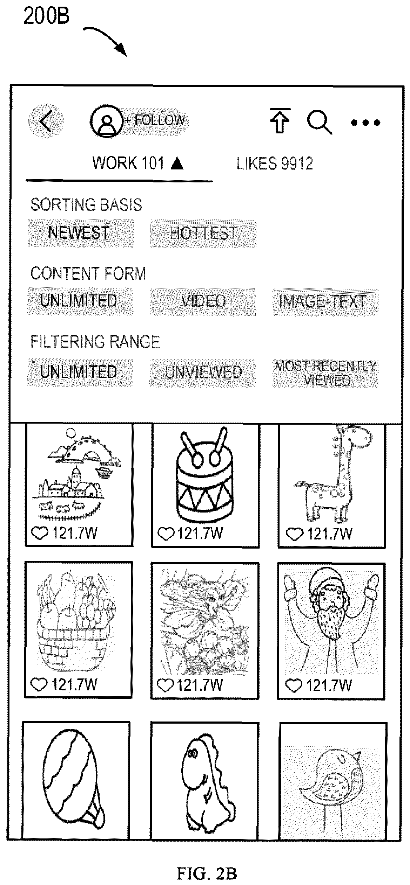

In some embodiments, the first trigger operation is a trigger operation on a navigation tag of the work display area. In other words, after detecting the trigger operation on the navigation tag in the work display area, the terminal device 110 presents the predetermined panel. Referring to FIG. 2A, when the user triggers/clicks on the navigation tag "work", the user interface 200A switches to the user interface 200B shown in FIG. 2B.

Additionally, in order to prompt the user to click the navigation tag "work", an extension operation may be triggered, and a prompt identifier 220 may be presented in association with the navigation tag "work". As shown in FIG. 2A, a black inverted triangle is displayed next to the navigation tag "work" to prompt the user to click the navigation tag to trigger an extension operation.

Alternatively or additionally, in order to more intuitively prompt the user that the work may be filtered, prompt information may be further presented in the user interface. As shown in FIG. 2A, in the user interface 200A, when the user triggers/clicks the navigation tag "work", a prompt information 230 "click to filter content" is presented in a form of bubble. The user may trigger display of the predetermined panel by clicking the bubble.

Additionally, in order to avoid excessive interference with the user, presentation of the prompt information may be constrained by a presentation condition. For example, the prompt information only presents a predetermined number of times to the user, for example, one time. In this case, when the prompt information is forbidden to be displayed, the predetermined panel may be presented as the user triggers/clicks the navigation tag "work".

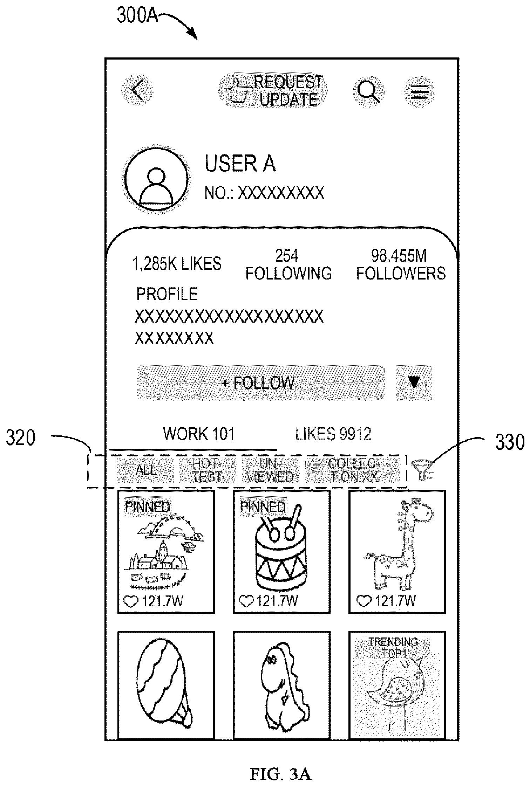

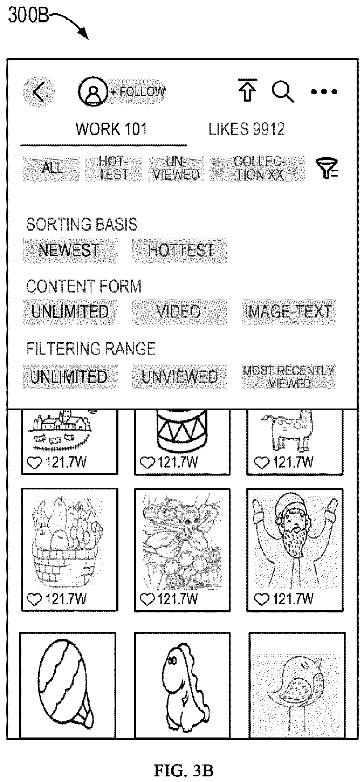

Alternatively, in some embodiments, the first trigger operation is a trigger operation on a trigger control corresponding to the predetermined panel. In other words, after detecting the trigger operation on the trigger control corresponding to the predetermined panel, the terminal device 110 presents the predetermined panel. Referring to FIG. 3A, when the user triggers/clicks on a trigger control 330, the user interface 300A switches to the user interface 300B illustrated in FIG. 3B.

In some embodiments, in response to the first trigger operation, the terminal device 110 presents the predetermined panel pinned on the information display page. Referring to FIG. 2B and FIG. 3B, the user information area is compressed and displayed, and the predetermined panel is pinned to the top.

Additionally, in order to achieve a more friendly interface interaction, the predetermined panel is pinned to display in a dynamic manner. For example, after the user clicks the navigation tag "work" in FIG. 2A or the trigger control 330 in FIG. 3A, the predetermined panel dynamically expands downward, while the user information area is compressed and displayed, and the predetermined panel area and the work display area are smoothly moved upward. In this way, a switching process of the page will be smoother.

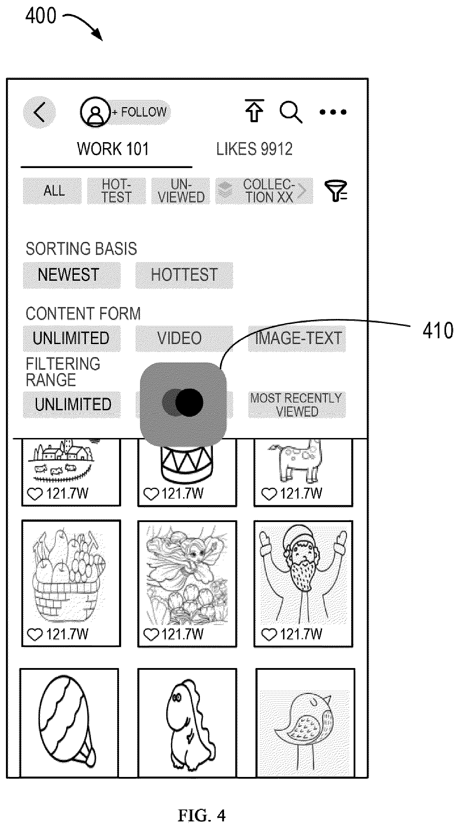

In some embodiments, the user may filter a work through a filtering condition in the predetermined panel. When a number of works is too large or a filtering logic is complex, the filtering process may require some time. In this case, in order to prompt the user that the filtering is ongoing, prompt information may be displayed to the user while performing the filtering operation. Referring to the example user interface 400 shown in FIG. 4, the prompt information 410 may let the user know that the filtering operation is being performed.

According to some embodiments of the present disclosure, a plurality of functions including filtering may be implemented in the predetermined panel. A specific description is as follows.

In some embodiments, the predetermined panel further includes at least one work sorting mode. In this case, in response to detecting a selection operation on a target sorting mode of the at least one work sorting mode, the terminal device 110 arranges a work in the work display area in the target sorting mode. Further referring to FIG. 2B and FIG. 3B, the predetermined panel includes a "sorting basis", and for example includes two sorting modes which are "newest" and "hottest". It should be understood that the "newest" and "hottest" sorting modes are merely illustrative. In other embodiments, other sorting modes may be included.

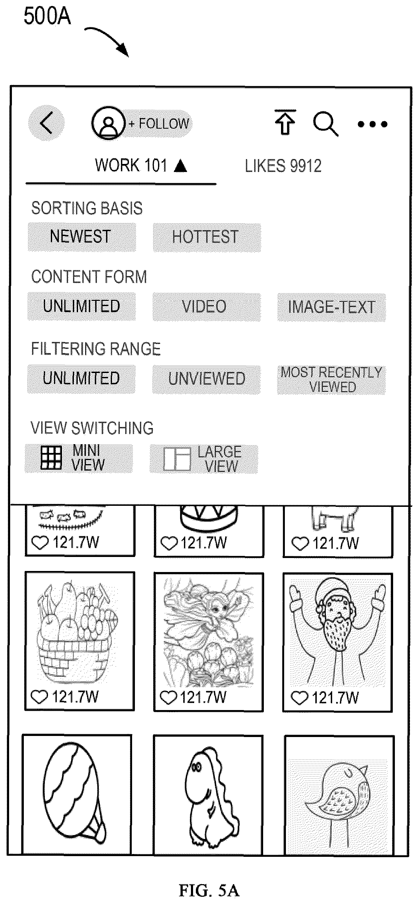

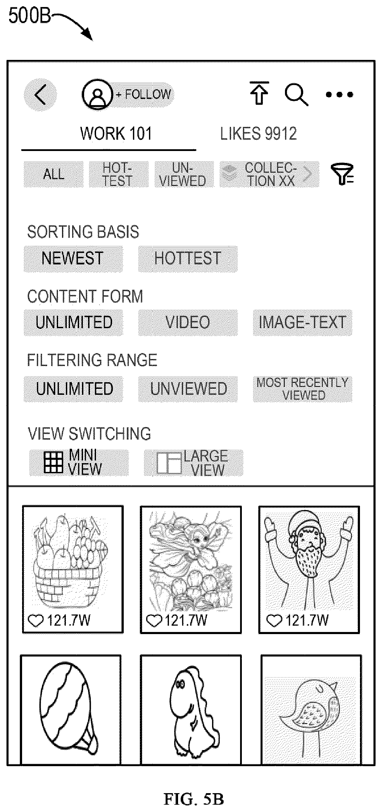

Alternatively or additionally, in some embodiments, the predetermined panel further includes a plurality of view modes. In this case, if a work in the work display area is presented in a first view mode of the plurality of view modes, when a selection operation on a second view mode of the plurality of view modes is detected, the terminal device 110 switches from the first view mode to the second view mode to present the work in the work display area. Referring to FIG. 5A and FIG. 5B, the example user interface 500A and user interface 500B that include a plurality of view modes are shown. As shown in FIG. 5A and FIG. 5B, the works are currently presented in a "mini view" view mode. Further, the user may trigger/click the "large view" view mode to implement the switching of the mode. It should be understood that the two view modes of "large view" and "mini view" are merely illustrative. In other embodiments, other view modes may be included.

In this way, while the filtering condition is presented, a change of the switching of the view mode and a change of the sorting basis can also be achieved, so that the user can browse the work in a most quick and convenient manner.

It should be understood that other functions contributing to filtering may be integrated in the predetermined panel in addition to the sorting mode and the view mode, including but not limited to controls such as searching.

Next, a plurality of filtering conditions in the predetermined panel will be further explained and described.

In some embodiments, the plurality of filtering conditions may include a plurality of filtering conditions divided by a work type. Referring to FIG. 2B and FIG. 3B, the work type may be filtered according to a "content form", and the filtering conditions may be "unlimited", "video" and "image-text". It should be understood that the above filtering conditions are merely illustrative. In other embodiments, the filtering conditions may further include, but are not limited to, "picture", "picture collection", and the like. The present disclosure is not limited in this respect.

Alternatively or additionally, the plurality of filtering conditions may include a plurality of filtering conditions divided by a work accessing status. Referring to FIG. 2B and FIG. 3B, the "filtering range" may be limited to filtering conditions such as "unlimited", "unviewed", and "most recently viewed".

Alternatively or additionally, the plurality of filtering conditions divided by the work accessing status may also include filtering conditions such as "viewed", "liked", "bought", "commented" etc. The above example filtering conditions are by way of example only, and the specific presentation text may be changed according to a specific copywriting design.

Alternatively or additionally, the plurality of filtering conditions may include a duration of the work, e.g., 60 minutes, 30 minutes, 10 minutes, etc. Alternatively or additionally, the plurality of filtering conditions may include a subject of the work, e.g., health, fitness, movies, music, and the like.

It should be understood that the above example filtering conditions should not be understood as limiting the present disclosure. In other embodiments, the filtering conditions may be flexibly set according to actual needs.

In some embodiments, the plurality of filtering conditions includes a plurality of sets of filtering conditions divided by a plurality of filtering rules, each set of filtering conditions allows a single filtering condition to be selected, and a plurality of filtering conditions in different sets of filtering conditions is allowed to be selected simultaneously.

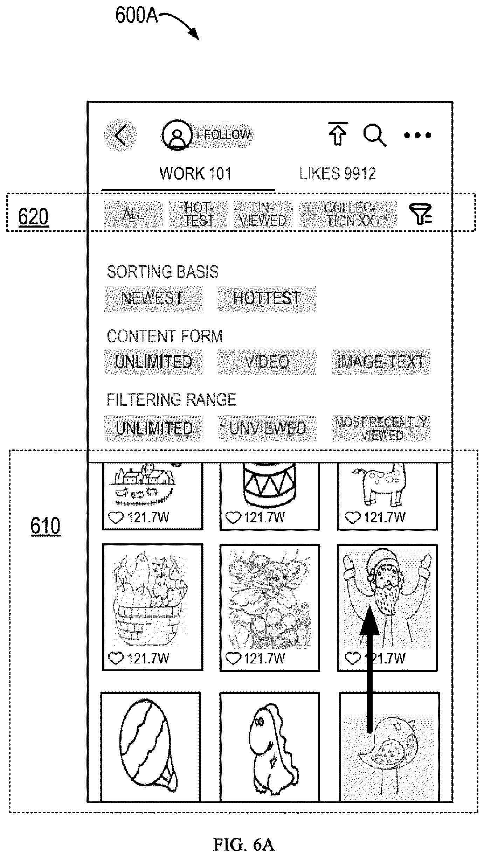

Referring to the example user interface 600A shown in FIG. 6A. In this example, the filtering conditions "unlimited", "video" and "image-text" corresponding to "content form" are divided into a set of filtering conditions, and only one filtering condition of the filtering conditions may be selected. Accordingly, the filtering conditions "unlimited", "unviewed" and "most recently viewed" corresponding to "filtering range" are divided into a set of filtering conditions, and also only one filtering condition of the filtering conditions may be selected.

It should also be understood that, when the predetermined panel includes functions such as "sorting"/"view switching", only one option may be selected among the options corresponding to the "sorting basis"/"view switching".

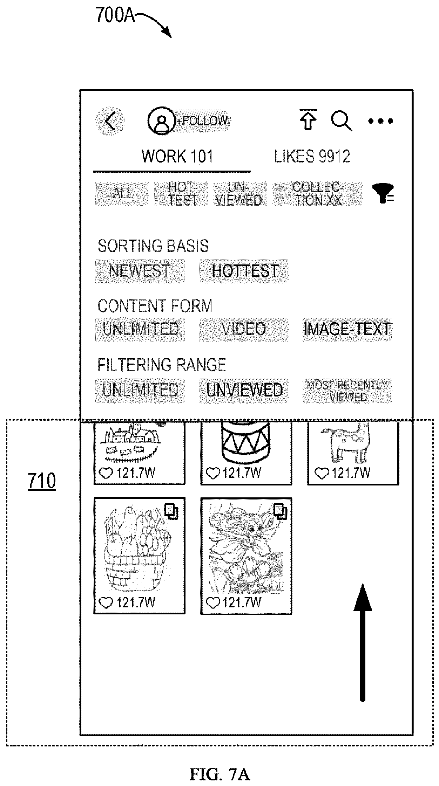

Further referring to the example user interface 700A shown in FIG. 7A. In FIG. 7A, the "image-text" and "unviewed" filtering conditions are divided into different filtering sets because they can be selected simultaneously. Further, the "sorting basis" may also be arbitrarily switched between "newest" and "hottest" to properly combine with the filtering conditions.

In this way, the user can realize quick and convenient work browsing through a plurality of filtering conditions and additionally combining the sorting basis (and/or view switching).

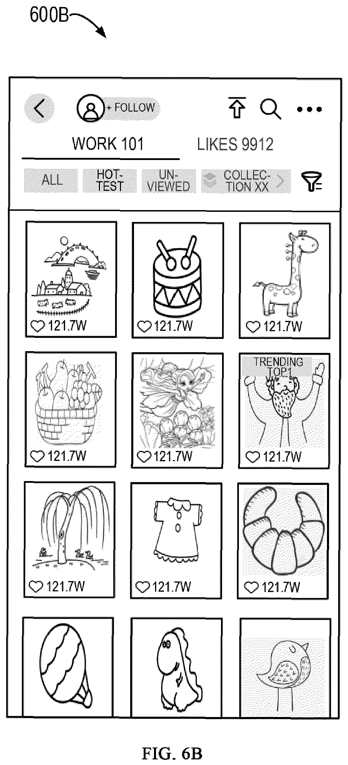

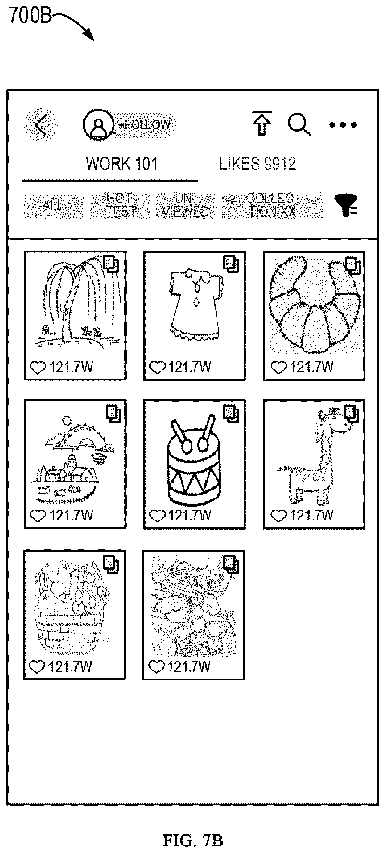

Next, the process of cancelling the presentation of the predetermined panel presentation will be described with reference to FIGS. 6A to 7B. In some embodiments, in response to detecting a second trigger operation while the predetermined panel is presented, the terminal device 110 cancels the presentation of the predetermined panel. Referring to the example user interfaces 600A and 600B illustrated in FIGS. 6A and 6B, when a second trigger operation is detected, the user interface is switched from the user interface 600A to the user interface 600B. With further reference to the example user interfaces 700A and 700B illustrated in FIGS. 7A and 7B, when the second trigger operation is detected, the user interface is switched from the user interface 700A to the user interface 700B.

In some embodiments, the second trigger operation includes a clicking operation in an area outside the predetermined panel, for example, a clicking operation in the work display area. Referring to FIG. 6A, when the user clicks on an area 610, the user interface is switched from the user interface 600A to the user interface 600B. Accordingly, when the user clicks on an area 710 in FIG. 7A, the user interface is switched from the user interface 700A to the user interface 700B.

Alternatively, in some embodiments, the second trigger operation includes an up-sliding operation in an area outside the predetermined panel. For example, the user interface is switched from the user interface 600A/700A to the user interface 600B/700B when an up-sliding operation of the user in the area 610 of FIG. 6A/ in the area 710 of FIG. 7A.

In some embodiments, the second trigger operation includes an up-sliding operation in the information display page. In this case, the area detecting the up-sliding operation is set to the entire user interface. In this case, the user interface is switched from the user interface 600A/700A to the user interface 600B/700B when an up-sliding distance of the user exceeds a predetermined distance.

In some embodiments, the second trigger operation includes a trigger operation on a navigation tag of an area other than the work display area in the information display page. For example, when the user clicks the navigation tag "work" in FIG. 6A/ FIG. 7A, the user interface is switched from the user interface 600A/700A to the user interface 600B/700B. It should be understood that clicking the navigation tag "likes" may also achieve the effect of canceling the presentation of the predetermined panel.

In some embodiments, the second trigger operation includes a clicking operation on a common tag (sometimes referred to as a secondary tag) in the predetermined panel. Referring to FIG. 6A, the user interface is switched from the user interface 600A to the user interface 600B when the user clicks on the common tags "all", "hottest", "unviewed" or "XX collection" in the area 620.

In some embodiments, the second trigger operation includes a trigger operation of a work in the work display area. For example, the user clicks on any work in the user interfaces of FIG. 6A/FIG. 7A, the user interface may be switched from the user interface 600A/700A to the user interface 600B/700B.

It should be further understood that, when presenting the predetermined panel is cancelled, if a third operation is detected, the predetermined panel may be presented in the information display page. For example, if the third operation is detected in the user interface 600B/ user interface 700B, the user interface switches to 600A/700A. Examples of the third operation include a down-sliding operation in the information display page, or the like.

In some embodiments, while presenting the information display page, the terminal device 110 presents at least one of the following in an adjacent area of the work display area: a trigger control corresponding to the predetermined panel, a tag corresponding to at least one option in the predetermined panel, and the at least one option includes at least one of: at least one filtering condition of a plurality of filtering conditions, at least one work sorting mode, and at least one view mode. For ease of discussion, these tags may also be referred to as "common tags" or "common filtering options". The user can quickly filter, sort, etc. the works by clicking these "common tags" or "common filtering items".

Referring to FIG. 3A, the following is presented in an adjacent area of the work display area: a trigger control 330 corresponding to the predetermined panel and a tag corresponding to at least one option in the predetermined panel, that is, "all", "hottest", "unviewed" and "XX collection" illustrated in the area 320.

Further referring to FIG. 6B and FIG. 7B, the following is presented in an adjacent area of the work display area: a trigger control corresponding to the predetermined panel and a tag corresponding to at least one option in the predetermined panel, that is, "all", "hottest", "unviewed" and "XX collection" illustrated in the area 320.

In some embodiments, at least one of the following is presented in the predetermined area: a trigger control corresponding to the predetermined panel, a tag corresponding to at least one option in the predetermined panel, and the at least one option includes at least one of: at least one filtering condition of a plurality of filtering conditions, at least one work sorting mode, and at least one view mode.

Referring to FIG. 6A and FIG. 7A, the trigger control corresponding to the predetermined panel in the predetermined area and the tag corresponding to the at least one option in the predetermined panel, that is, the secondary tag "all", "hottest", "unviewed", and the "XX collection", etc. The user can quickly filter, sort, etc. the works by clicking on these "common tags" or "common filtering items".

In some embodiments, an appearance style of the tag corresponding to the at least one option is determined based on a selected state of the at least one option in the predetermined panel, and the selected state indicates whether the at least one option is selected.

Referring to FIG. 6A, the "hottest" in the sorting basis is selected. At this point, the presentation logic completely matches the common tag "hottest". Then the secondary tag "hottest" is changed from gray to "black" to indicate that the current selection completely overlaps with the common tag "hottest". At this time, even if presenting the predetermined panel is canceled, the appearance style of the common tag "hottest" still does not change, that is, present as black to indicate that the tag is selected, as shown in FIG. 6B.

Referring to FIG. 7A, "hottest", "image-text", and "unviewed" are selected simultaneously. At this time, since the current presentation logic is not overlapped with any common tag. Thus, all of the common tags are shown as gray. It should be understood that, in the example of FIG. 7A, if the sorting basis is "newest", the content form is "unlimited", and the filtering range is "unviewed", then the secondary tag "unviewed" is displayed as black. For purposes of brevity, other cases will not be listed one by one.

In some embodiments, the appearance style of the trigger control is determined based on at least one of: detecting a trigger operation of the trigger control, and a selected state of the at least one option in the predetermined panel.

Refer to 3A and FIG. 3B. In FIG. 3A, the trigger control 330 is in an unactivated state, thus presented in a first appearance style, i.e., gray. When the user triggers the trigger control 330 in FIG. 3A to switch to the user interface 300B, the trigger control is presented in a second appearance style, that is, black, to indicate that the trigger control is currently in an activated state.

Further referring to FIG. 6A. In FIG. 6A, "hottest" in the sorting basis is selected. At this point, the presentation logic completely matches the common tag "hottest". The common tag "hottest" is changed from gray to "black" to indicate that the current selection completely overlaps with the common tag "hottest". Further, the filtering control is displayed as a hollow black to indicate that the filtering function is activated, and the current filtering logic may be represented by a common tag without further viewing specific options in the predetermined panel.

Further refer to FIG. 7A. In FIG. 7A, "hottest", "image-text", and "unviewed" are selected simultaneously. At this time, since the current presentation logic is not overlapped with any common tag. Thus, all of the common tags are shown as gray. Further, the filtering control is changed from the hollow black to a solid black to indicate that the filtering function is activated and the current presentation logic cannot be indicated by the common tag, and the user is required to view the predetermined panel to obtain detailed information.

Further referring to FIG. 6B and FIG. 7B, the user interface 600B and user interface 700B after the predetermined panel cancels display are shown. In FIG. 6B, the appearance style of the common tag and the filtering control are the same as the appearance style in FIG. 6A. In the interface of FIG. 6B, the user may know the current presentation logic by presenting the common tag "hottest" as black, and/or displaying the filtering control as the hollow black.

In the interface of FIG. 7B, the filtering controls are displayed as the solid black. Through the appearance style, the user can know that if the user need to know the details of the presentation logic, that is, which filtering items are selected, the user need to expand the predetermined panel to obtain more detailed information .

By changing the common tag and the style of the filtering control, the user are able to more intuitively understand the current presentation and the filtering logic, thereby improving the user experience.

In summary, according to the example embodiments of the present disclosure, the presentation of the predetermined panel may be triggered in the information display page. Through the predetermined panel, the work in the personal homepage can be filtered. Further, the predetermined panel may also include function controls such as sorting logic and view switching. In this way, the user can implement flexible and personalized presentation logic, thereby achieving efficient, quick and convenient browsing of the works. Furthermore, by setting the common tag in the user page, the user can quickly filter the works, thereby improving the user experience.

### Example Methods

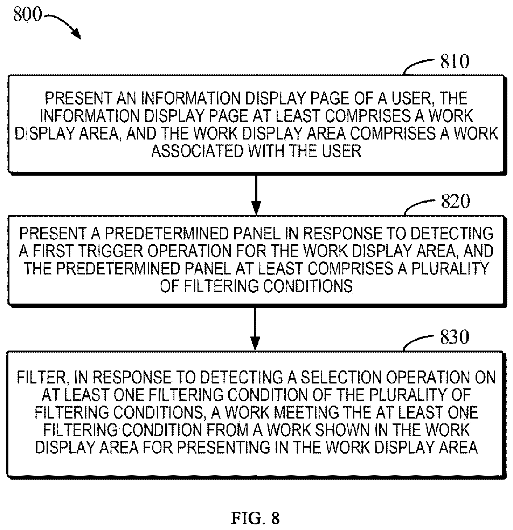

FIG. 8 illustrates a flowchart of a process 800 for page interaction according to some embodiments of the present disclosure. The process 800 may be implemented at the terminal device 110. The process 800 is described below with reference to FIG. 1A.

At block 810, the terminal device 110 presents an information display page of a user, the information display page at least includes a work display area, and the work display area includes a work associated with the user.

At block 820, in response to detecting a first trigger operation for the work display area, the terminal device 110 presents a predetermined panel, and the predetermined panel at least includes a plurality of filtering conditions.

At block 830, in response to detecting a selection operation on at least one filtering condition of the plurality of filtering conditions, the terminal device 110 filters a work meeting the at least one filtering condition from a work shown in the work display area for presenting in the work display area.

In some embodiments, the predetermined panel further comprises at least one work sorting mode. In response to detecting a selection operation on a target sorting mode of the at least one work sorting mode, the terminal device 110 arranges a work in the work display area in the target sorting mode.

In some embodiments, the predetermined panel further includes a plurality of view modes, and a work in the work display area is presented in a first view mode of the plurality of view modes. In response to detecting a selection operation on a second view mode of the plurality of view modes, switching from the first view mode of the terminal device 110 to the second view mode presents a work in the work display area.

In some embodiments, the plurality of filtering conditions includes a plurality of sets of filtering conditions divided by a plurality of filtering rules, each set of filtering conditions allows a single filtering condition to be selected, and a plurality of filtering conditions in different sets of filtering conditions are allowed to be selected simultaneously.

In some embodiments, the plurality of filtering conditions includes at least one of: a plurality of filtering conditions divided by a work type, and a plurality of filtering conditions divided by a work accessing status.

In some embodiments, the terminal device 110 presents the predetermined panel pinned on the information display page.

In some embodiments, the first trigger operation includes one of: a trigger operation on a navigation tag of the work display area, or a trigger operation on a trigger control corresponding to the predetermined panel.

In some embodiments, the terminal device presents at least one of the following in a predetermined area or in an adjacent area of the work display area while presenting the information display page: a trigger control corresponding to the predetermined panel, a tag corresponding to at least one option in the predetermined panel, the at least one option including at least one of: at least one filtering condition of the plurality of filtering conditions, at least one work sorting mode, and at least one view mode.

In some embodiments, an appearance style of the tag corresponding to the at least one option is determined based on a selected state of at least one option in the predetermined panel, and the selected state indicates whether the at least one option is selected.

In some embodiments, the appearance style of the trigger control is determined based on at least one of: detecting a trigger operation of the trigger control, or a selected state of the at least one option in the predetermined panel.

In some embodiments, in response to detecting a second trigger operation while the predetermined panel is presented, the terminal device 110 cancels presentation of the predetermined panel.

In some embodiments, the second trigger operation includes one of: a clicking operation in an area outside the predetermined panel, an up-sliding operation in an area outside the predetermined panel, an up-sliding operation in the information display page, a trigger operation on a navigation tag of an area other than the work display area in the information display page, or a trigger operation of a work in the work display area.

### Example Device and Apparatus

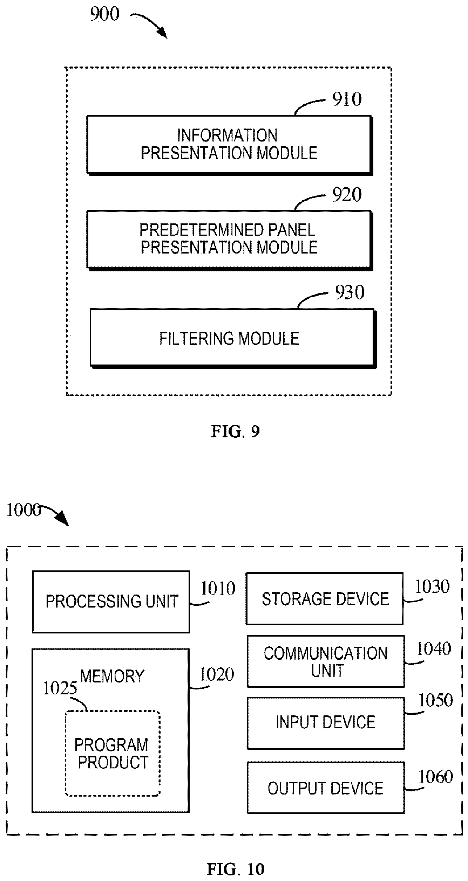

FIG. 9 illustrates a schematic structural block diagram of an apparatus 900 for page interaction according to some embodiments of the present disclosure. The apparatus 900 may be implemented as the terminal device 110 or included in the terminal device 110. The various modules/components in the apparatus 900 may be implemented by hardware, software, firmware, or any combination thereof.

As shown, the apparatus 900 includes an information presentation module 910 configured to present an information display page of a user, the information display page at least including a work display area, and the work display area including a work associated with the user; a predetermined panel presentation module 920 configured to present a predetermined panel in response to detecting a first trigger operation for the work display area, the predetermined panel at least including a plurality of filtering conditions; and a filtering module 930 configured to filter, in response to detecting a selection operation on at least one filtering condition of the plurality of filtering conditions, a work meeting the at least one filtering condition from the work shown in the work display area for presenting in the work display area.

In some embodiments, the predetermined panel further includes at least one work sorting mode. The apparatus 900 further includes a sorting module (not shown) configured to arrange, in response to detecting a selection operation on a target sorting mode of the at least one work sorting mode, a work in the work display area in the target sorting mode.

In some embodiments, the predetermined panel further includes a plurality of view modes, and the work in the work display area is presented in a first view mode of the plurality of view modes. The apparatus 900 also includes a view switching module (not shown) configured to present, in response to detecting a selection operation on a second view mode of the plurality of view modes, a work in the work display area switching from the first view mode to the second view mode.

In some embodiments. The plurality of filtering conditions includes a plurality of sets of filtering conditions divided by a plurality of filtering rules, each set of filtering conditions allows a single filtering condition to be selected, and a plurality of filtering conditions in different sets of filtering conditions is allowed to be selected simultaneously.

In some embodiments, the plurality of filtering conditions includes at least one of: a plurality of filtering conditions divided by a work type, and a plurality of filtering conditions divided by a work accessing status.

In some embodiments, the predetermined panel presentation module 920 is further configured to present the predetermined panel pinned on the information display page.

In some embodiments, the first trigger operation includes one of: a trigger operation on a navigation tag of the work display area, or a trigger operation on a trigger control corresponding to the predetermined panel.

In some embodiments, the apparatus 900 further includes an adjacent area display module (not shown) configured to present at least one of the following in a predetermined area or in an adjacent area of the work display area while presenting the information display page: a trigger control corresponding to the predetermined panel, a tag corresponding to at least one option in the predetermined panel, the at least one option including at least one of: at least one filtering condition of the plurality of filtering conditions, at least one work sorting mode, and at least one view mode.

In some embodiments, the appearance style of the tag corresponding to the at least one option is determined based on a selected state of at least one option in the predetermined panel, and the selected state indicates whether the at least one option is selected.

In some embodiments, the appearance style of the trigger control is determined based on at least one of: detecting a trigger operation of the trigger control, and a selected state of at least one option in the predetermined panel.

In some embodiments, the apparatus 900 further includes a canceling predetermined panel presentation module (not shown) configured to cancel, in response to detecting a second trigger operation while the predetermined panel is presented, presentation of the predetermined panel.

In some embodiments, the second trigger operation includes one of: a clicking operation in an area outside the predetermined panel, an up-sliding operation in an area outside the predetermined panel, an up-sliding operation in the information display page, a trigger operation on the navigation tag of an area other than the work display area in the information display page, or a trigger operation of a work in the work display area.

FIG. 10 illustrates a block diagram of an electronic device 1000 in which one or more embodiments of the present disclosure may be implemented. It should be understood that the electronic device 1000 illustrated in FIG. 10 is merely for example and should not constitute any limitation on the functionality and scope of the embodiments described herein. The electronic device 1000 shown in FIG. 10 may be configured to implement the terminal device 110 in FIG. 1A or the apparatus 900 in FIG. 9.

As shown in FIG. 10, the electronic device 1000 is in a form of a general-purpose computing device. Components of the electronic device 1000 may include, but are not limited to, one or more processors or processing units 1010, a memory 1020, a storage device 1030, one or more communication units 1040, one or more input devices 1050, and one or more output devices 1060. The processing unit 1010 may be an actual or virtual processor and capable of performing various processes according to programs stored in the memory 1020. In multiprocessor systems, a plurality of processing units performs computer-executable instructions in parallel to improve parallel processing capabilities of electronic device 1000.

The electronic device 1000 typically includes a plurality of computer storage media. Such media may be any available media accessible to the electronic device 1000, including, but not limited to, volatile and non-volatile media, removable and non-removable media. The memory 1020 may be volatile memory (e.g., a register, a cache, a random access memory (RAM)), a non-volatile memory (e.g., a read-only memory (ROM), an electrically erasable programmable read-only memory (EEPROM), a flash memory), or some combination thereof. The storage device 1030 may be a removable or non-removable medium and may include a machine-readable medium, such as a flash drive, magnetic disk, or any other medium, which may be capable of storing information and/or data (e.g., training data for training) and may be accessed within the electronic device 1000.

The electronic device 1000 may further include additional removable/non-removable, volatile/non-volatile storage media. Although not shown in FIG. 10, a disk drive for reading or writing from a removable, non-volatile magnetic disk (e.g., a "floppy disk") and an optical disk drive for reading or writing from a removable, non-volatile optical disk may be provided. In these cases, each drive may be connected to a bus (not shown) by one or more data media interfaces. The memory 1020 may include a computer program product 1025 having one or more program modules configured to perform various methods or acts of various embodiments of the present disclosure.

The communication unit 1040 is configured to communicate with another electronic device through a communication medium. Additionally, the functionality of components of the electronic device 1000 may be implemented in a single computing cluster or a plurality of computing machines capable of communicating over a communication connection. Thus, the electronic device 1000 may operate in a networked environment using logical connections with one or more other servers, network personal computers (PCs), or another network node.

The input device 1050 may be one or more input devices, such as a mouse, a keyboard, a trackball, or the like. The output device 1060 may be one or more output devices, such as a display, a speaker, a printer, or the like. The electronic device 1000 may also communicate with one or more external devices (not shown) through the communication unit 1040 as needed, the external devices such as storage devices, display devices, etc. , communicate with one or more devices that enable a user to interact with the electronic device 1000, or communicate with any device (e.g., a network card, a modem, etc. ) that enables the electronic device 1000 to communicate with one or more other electronic devices. Such communication may be performed via an input/output (I/O) interface (not shown).

According to example embodiments of the present disclosure, a computer-readable storage medium having computer-executable instructions stored thereon is provided, where the computer-executable instructions are executed by a processor to implement the method described above. According to an example embodiment of the present disclosure, a computer program product is further provided, the computer program product being tangibly stored on a non-transitory computer-readable medium and including computer-executable instructions, the computer-executable instructions being executed by a processor to implement the method described above.

Aspects of the present disclosure are described herein with reference to flowcharts and/or block diagrams of methods, apparatuses, devices and computer program products implemented in accordance with the present disclosure. It should be understood that each block of the flowchart and/or block diagram, and combinations of blocks in the flowcharts and/or block diagrams, may be implemented by computer-readable program instructions.

These computer-readable program instructions may be provided to a processing unit of a general purpose computer, special purpose computer, or other programmable data processing apparatus to produce a machine, such that the instructions, when executed by a processing unit of a computer or other programmable data processing apparatus, produce apparatuses to implement the functions/acts specified in the flowcharts and/or block diagrams. These computer-readable program instructions may also be stored in a computer-readable storage medium that cause the computer, programmable data processing apparatus, and/or other devices to function in a particular manner, such that the computer-readable medium storing instructions includes an article of manufacture including instructions to implement aspects of the functions/acts specified in the flowcharts and/or block diagrams.

The computer-readable program instructions may be loaded onto a computer, other programmable data processing apparatuses, or other devices, such that a series of operational steps are performed on a computer, other programmable data processing apparatuses, or other devices to produce a computer-implemented process, thereby enabling the instructions executed on a computer, other programmable data processing apparatuses, or other devices to implement the functions/acts specified in the flowcharts and/or block diagrams block or blocks.

The flowcharts and block diagrams in the drawings show architecture, functionality, and operation of possible implementations of systems, methods, and computer program products according to various implementations of the present disclosure. In this regard, each block in the flowcharts or block diagrams may represent a module, program segment, or portion of an instruction that includes one or more executable instructions for implementing the specified logical function. In some alternative implementations, the functions noted in the blocks may also occur in a different order than noted in the figures. For example, two consecutive blocks may actually be performed substantially in parallel, which may sometimes be performed in a reverse order, depending on the functionality involved. It is also noted that each block in the block diagrams and/or flowcharts, as well as combinations of blocks in the block diagrams and/or flowcharts, may be implemented with a dedicated hardware-based system that performs the specified functions or acts, or may be implemented in a combination of dedicated hardware and computer instructions.

Various implementations of the present disclosure have been described above, and the above descriptions are, for example, not exhaustive, and are not limited to the implementations disclosed. Many modifications and variations without departing from the scope and spirit of the various implementations illustrated will be apparent to those of ordinary skill in the art. Selection of the terms used herein is intended to best explain the principles of the implementations, practical applications, or improvements to techniques in the marketplace, or to enable others of ordinary skill in the art to understand the various embodiments disclosed herein.

## Claims

1. A method for page interaction, comprising:
presenting an information display page of a user, the information display page at least comprising a work display area, the work display area comprising a work associated with the user;
presenting a predetermined panel in response to detecting a first trigger operation for the work display area, the predetermined panel at least comprising a plurality of filtering conditions; and
filtering, in response to detecting a selection operation on at least one filtering condition of the plurality of filtering conditions, a work meeting the at least one filtering condition from a work shown in the work display area for presenting in the work display area.

2. The method of claim 1, wherein the predetermined panel further comprises at least one work sorting mode, the method further comprises:
arranging, in response to detecting a selection operation on a target sorting mode of the at least one work sorting mode, a work in the work display area in the target sorting mode.

3. The method of claim 1, wherein the predetermined panel further comprises a plurality of view modes, a work in the work display area being presented in a first view mode of the plurality of view modes, and the method further comprises:
presenting, in response to detecting a selection operation on a second view mode of the plurality of view modes, a work in the work display area switching from the first view mode to the second view mode.

4. The method of claim 1, wherein the plurality of filtering conditions comprises a plurality of sets of filtering conditions divided by a plurality of filtering rules, each set of filtering conditions allowing a single filtering condition to be selected, and a plurality of filtering conditions in different sets of filtering conditions being allowed to be selected simultaneously.

5. The method of claim 1, wherein the plurality of filtering conditions comprises at least one of: a plurality of filtering conditions divided by a work type, or a plurality of filtering conditions divided by a work accessing status.

6. The method of claim 1, wherein presenting the predetermined panel comprises:
presenting the predetermined panel pinned on the information display page.

7. The method of claim 1, wherein the first trigger operation comprises one of:
a trigger operation on a navigation tag of the work display area, or
a trigger operation on a trigger control corresponding to the predetermined panel.

8. The method of claim 1, further comprising:
presenting at least one of the following in a predetermined area or in an adjacent area of the work display area while presenting the information display page:
a trigger control corresponding to the predetermined panel, or
a tag corresponding to at least one option in the predetermined panel, the at least one option comprising at least one of: at least one filtering condition of the plurality of filtering conditions, at least one work sorting mode, and at least one view mode.

9. The method of claim 8, wherein an appearance style of the tag corresponding to the at least one option is determined based on a selected state of the at least one option in the predetermined panel, the selected state indicating whether the at least one option is selected.

10. The method of claim 8, wherein the appearance style of the trigger control is determined based on at least one of:
detecting a trigger operation of the trigger control; or
a selected state of the at least one option in the predetermined panel.

11. The method of claim 1, further comprising:
canceling, in response to detecting a second trigger operation while the predetermined panel is presented, presentation of the predetermined panel.

12. The method of claim 11, wherein the second trigger operation comprises one of:
a clicking operation in an area outside the predetermined panel,
an up-sliding operation in an area outside the predetermined panel,
an up-sliding operation in the information display page,
a trigger operation on a navigation tag of an area other than the work display area in the information display page, or
a trigger operation of a work in the work display area.

13. An apparatus for page interaction, comprising:
an information presentation module configured to present an information display page of a user, the information display page at least comprising a work display area, the work display area comprising a work associated with the user;
a predetermined panel presentation module configured to present a predetermined panel in response to detecting a first trigger operation for the work display area, the predetermined panel at least comprising a plurality of filtering conditions; and
a filtering module configured to filter, in response to detecting a selection operation on at least one filtering condition of the plurality of filtering conditions, a work meeting the at least one filtering condition from the work shown in the work display area for presenting in the work display area.

14. An electronic device, comprising:
at least one processing unit; and
at least one memory coupled to the at least one processing unit and storing instructions for execution by the at least one processing unit, the instructions, when executed by the at least one processing unit, causing the device to perform the method of any of claims 1 to 12.

15. A computer-readable storage medium having a computer program stored thereon, the computer program, when executed by a processor, implementing the method of any of claims 1 to 12.
